# EUROPEAN PATENT APPLICATION

(11) **EP 0 816 210 A1**
(43) Date of publication of application: **07.01.1998**
(21) Application number: 97500110.8
(22) Date of filing: 25.06.1997
(51) Int. Cl.: B62D 47/00

(54) **Nestable vehicles**

(30) Priority: 27.06.1996 ES 9601443
(71) Applicant: Rendall, William M.C., 28220 Majadahonda, Madrid (ES)
(72) Inventor: Rendall, William M.C., 28220 Majadahonda, Madrid (ES)

(57) **Abstract**

Perfected automotive vehicle, containing recess or housing in the rear central part of the chassis and body work structure, in order to facilitate and enable the connection of the front part of an identical or similar vehicle. The front part of each vehicle to have a progressively increasing width towards the rear, thereby reducing the space required to park a line of vehicles by this means of connection.

## Description

The object of the present invention is a perfected, automotive vehicle.

The innovation of the invented vehicle is its ability to partially inter-lock with other identical or similar vehicles in a line, thereby achieving a system of parking in which significant space is saved helping to solve present day problems of traffic and parking.

At present, no vehicles are known of which by means of their own structure and shape of body work can be connected to each other in the same way as the connection made by shopping trolleys as found in large commercial centres.

By means of the invented vehicle, a new concept of vehicle usage is put into operation in large cities and, more importantly, a new form of parking vehicles together by partial inter-locking of the vehicles in a line.

These vehicles or cars will be preferably of reduced dimensions with an electric motor or not.

According to this invention the vehicle, which can have three or four wheels, one or more presenting autonomous means of motorization, is to have a structure such that allows the assembly of body work in such a way that the width of the front part progressively increases towards the rear up to a length of at least that of the housing found in the rear part of the same vehicle.

This housing is perfectly centred and has a shape identical or similar to the front part of the vehicle, given that between two consecutive cars a connection is made between the front part of one and the rear part of the other, in order to save a significant amount of space in the coupling of the vehicles and while parked.

Obviously, the invention does not concentrate on precise construction details of the vehicle, as could be the shape of the body work for example, but more essentially on the fact that each vehicle has a recess or housing in its rear central part, preferably with a concave curve, into which the front part of an identical or similar vehicle connects.

In order to understand not only the way the body work is put together, but also the actual use of the vehicle more easily, the following practical example is given of how it could be used, this being merely enunciatory and by no means limitary of the same, as is shown in the drawings attached, in which:

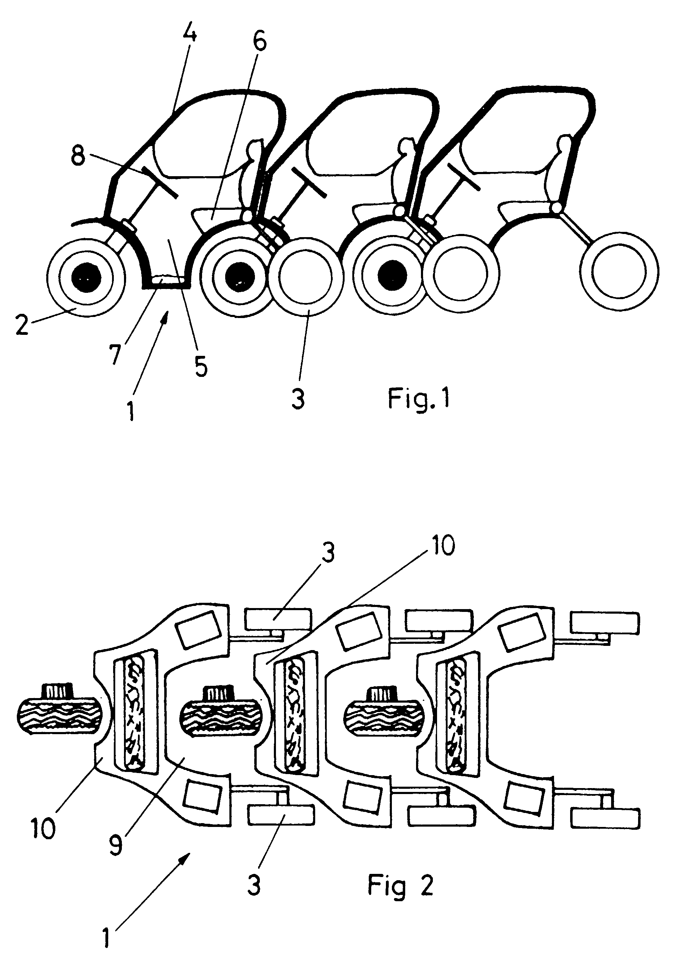

Figure 1 shows a diagrammatic view of a series of invented vehicles connected in line.

Figure 2 shows a sectional and plan view of figure 1.

Regarding the drawings, the invented automotive vehicle 1 is shown connected in a series of the same.

The automotive vehicle 1 has a front wheel 2 and another two rear ones 3, even though as has been already stated, the number of wheels can vary and in no instance is limitary of the invention.

The vehicle 1 has body work 4 which defines a cabin 5 in which a seat 6 and a floor 7 appear as does the steering wheel 8 and the steering.

The body work 4 shows a recess or housing in its central rear part 9 which is connected to the front part of the vehicle behind as is shown in the drawings.

## Claims

1. Perfected automotive vehicle characterized by having a chassis and body work structure which has a recess or housing in its central rear part that facilitates and enables the connection of the front part of an identical or similar vehicle, having, in the said front part, a section with a progressively increasing width towards the rear, thereby reducing by the said means of connection, the space required for parking vehicles in a line.

2. Vehicle, as described in claim 1, characterized because the recess or housing has the shape of an open polygonal line.

3. Vehicle, as described in claim 1, characterized because the recess or housing has the shape of curving concave outline.
